# EUROPÄISCHE PATENTSCHRIFT

(11) **EP 1 213 162 B1**
(45) Veröffentlichungstag und Bekanntmachung des Hinweises auf die Patenterteilung: **19.03.2008**
(21) Anmeldenummer: 01128879.2
(22) Anmeldetag: 05.12.2001
(51) Int. Cl.: B60G 3/20, B60G 15/14

(54) **Einzelradaufhängung für ein gefedertes, lenkbares Rad**
Independent wheel suspension for sprung, steerable wheel
Suspension de roue indépendante pour un roue directrice

(30) Priorität: 09.12.2000 DE 10061407
(43) Veröffentlichungstag der Anmeldung: 12.06.2002
(73) Patentinhaber: ZF FRIEDRICHSHAFEN Aktiengesellschaft, 88038 Friedrichshafen (DE)
(72) Erfinder: Wimmer, Hans, 94127 Neuburg (Inn) (DE); Eickhoff, Mathias, 94081 Fürstenzell (DE); Gell, Klaus, 94130 Obernzell (DE); Fenzl, Max, 94034 Passau (DE)

(56) Entgegenhaltungen:
- EP-A- 0 854 055
- DE-A- 1 938 850
- DE-A- 2 035 307
- DE-A- 19 619 189
- FR-A- 2 707 926
- FR-A- 2 721 258
- US-A- 4 313 619
- STENGELIN A: "DER NEUE REISEBUS O 404 VON MERCEDES-BENZ" ATZ AUTOMOBILTECHNISCHE ZEITSCHRIFT, FRANCKH'SCHE VERLAGSHANDLUNG. STUTTGART, DE, Bd. 94, Nr. 1, 1992, Seiten 4-6,8,11-, XP000241628 ISSN: 0001-2785
- "ANNOUNCEMENT" AUTOMOTIVE ENGINEER, MECHANICAL ENGINEERING PUBL.LTD. BURY ST.EDMUNDS, GB, Bd. 19, Nr. 5, 1. Oktober 1994 (1994-10-01), Seite 12 XP000472089 ISSN: 0307-6490
- ROUQUETTE J: "ZF DEVOILE SES DERNIERES NOUVEAUTES" REVUE TECHNIQUE DIESEL, ETAI. BOULOGNE-BILLANCOURT, FR, Bd. 37, Nr. 225, September 2000 (2000-09), Seiten 42-44, XP000969451 ISSN: 0037-2579

## Beschreibung

Die Erfindung betrifft eine Einzelradaufhängung für ein gefedertes, lenkbares Rad nach der im Oberbegriff von Anspruch 1 näher definierten Art.

Einzelradaufhängungen mit oberen und unteren Querlenkern werden häufig wegen der günstigen kinematischen Eigenschaften bei Nutzfahrzeugen sowie Omnibussen eingesetzt. Als Lenkung wird häufig eine Lenkvorrichtung mit einem Schraubengetriebe verwendet, welches mittelbar auf eine Spurstange und einen Lenkhebel wirkt.

Die DE 196 19 189 A1 offenbart eine Einzelradaufhängung für ein luftgefedertes, lenkbares Rad eines Omnibusses oder Lastkraftwagens, bei welchem ein Achsschenkelträger mit einem oberen Querlenker und einem unteren Querlenker verbunden ist, wobei am oberen Ende des Achsschenkelträgers eine Luftfeder angeordnet ist und im unteren Bereich des Achsschenkelträgers ein Stoßdämpfer mit dem Achsschenkelträger verbunden ist. Der untere Querlenker ist über ein Kugelgelenk mit dem Achsschenkelträger, der obere Querlenker über ein Drehgelenk mit dem Achsschenkelträger verbunden. Die Spurstange, welche mit einem Lenkhebel verbunden ist, kreuzt den unteren Querlenker. Da der obere Querlenker über ein Drehgelenk mit dem Achsschenkelträger verbunden ist, erstrecken sich die Arme des oberen Querlenkers erheblich in Richtung Fahrzeugmitte, wodurch der Mittelgang erheblich eingeschränkt wird. Dies ist in dem Raumbedarf des Drehgelenkes begründet. Eine Bauraumvergrößerung durch Verkürzung des oberen Querlenkers würde zu kinematischen Nachteilen bei größeren Federwegen führen. Indem die Spurstange der Lenkungsanordnung den unteren Querlenker kreuzt, ragt die Lenkungsanordnung weit in den Motortunnel oder einen Mittelgang hinein, wodurch der Motortunnel oder der Mittelgang unzulässig verkleinert wird.

Weitere relevante Einzelradaufhängungen sind aus dem Dokument FR 2 707 926 und dem Artikel "ZF dévoile ses dernières nouveautés", Revue Technique, Diesel, Rauquette, J.,et.al., Bd.37, Nr.225, Sept.2000, Seiten 42-44 bekannt.

Der vorliegenden Erfindung liegt die Aufgabe zugrunde eine Einzelradaufhängung für ein gefedertes, lenkbares Rad vorzugsweise für Nutzfahrzeuge zu schaffen, welche einen ausreichenden Bauraum zwischen den oberen und den unteren Querlenkern schafft, und ausreichenden Federweg ohne kinematische Nachteile gestattet.

Die Aufgabe wird mit einer auch die kennzeichnenden Merkmale des Hauptanspruchs aufweisenden, gattungsgemäßen Einzelradaufhängung für ein gefedertes, lenkbares Rad gelöst.

Erfindungsgemäß weist die Einzelradaufhängung für ein gefedertes, lenkbares Rad einen Achsschenkel auf, welcher über einen Lenkhebel mit einer Spurstange in Verbindung steht und an einem Achsschenkelträger befestigt ist, mit welchem der obere Querlenker über ein Kugelgelenk oder ein Molekulargelenk verbunden ist und mit welchem der untere Querlenker über ein Drehgelenk, z. B. mittels Wälzlager oder Gummibuchsen, verbunden ist. Durch das kompakte kugelförmige Gelenk am oberen Querlenker kann der obere Querlenker weit in Richtung Fahrzeugaußenseite geschoben werden, wodurch zwischen den oberen Querlenkern ausreichender Freiraum für Motor oder Mittelgang geschaffen wird und der obere Querlenker ausreichend Länge aufweist und somit der Federweg nicht verringert wird. Der Lenkhebel und die Spurstange sind vor dem unteren Querlenker angeordnet, so daß sich die Spurstange und der untere Querlenker nicht kreuzen und somit ausreichend Bauhöhe für den Motortunnel vorhanden ist. Die Verbindung des unteren Querlenkers mit dem Fahrzeugchassis oder einem Fahrzeugrahmen ist überwiegend, in Fahrzeugrichtung gesehen, hinter der Radachse angeordnet, wodurch ausreichend Bauraum für die Lenkungsanordnung geschaffen wird. Es besteht auch die Möglichkeit, die Verbindung mit dem Fahrzeugchassis vor der Radachse und die Lenkung hinter der Radachse anzuordnen. Zwischen den Armen des oberen Querlenkers ist ein Stoßdämpfer und eine Feder angeordnet, welche zu einem einzigen Bauteil vereinigt sind, wobei das Stoßdämpferfederbauteil im unteren Bereich direkt mit dem Achsschenkelträger verbunden ist und im oberen Bereich mit dem Fahrzeugchassis oder einem Fahrzeugrahmen verbunden ist. Indem das Stoßdämpferfederbauteil direkt mit dem Achsschenkelträger verbunden ist, wird die Radkraft ohne Übersetzung in das Stoßdämpferfederbauteil eingeleitet, wodurch die Luftfeder und der Stoßdämpfer kompakt bauen und der Bauraum der Einzelradaufhängung verringert werden kann. Die Herstellung und Ausführung der Querlenker, Gelenke und Achsschenkel und weiterer Bauteile kann gemäß der DE 196 19 189 A1 erfolgen.

Weitere Merkmale sind der Figurenbeschreibung zu entnehmen.
Es zeigen:

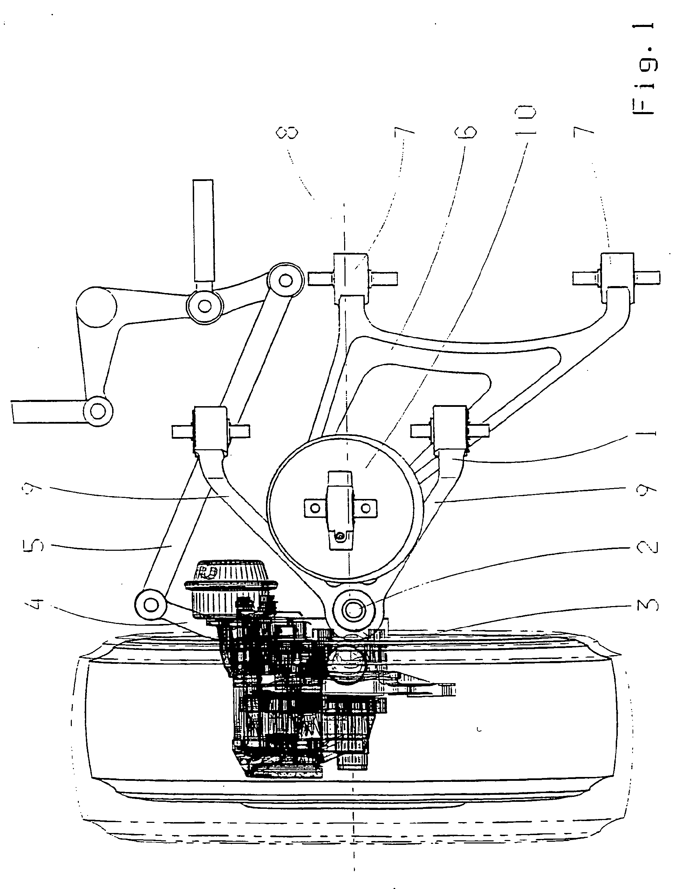

- Fig. 1: eine Draufsicht auf die Einzelradaufhängung;

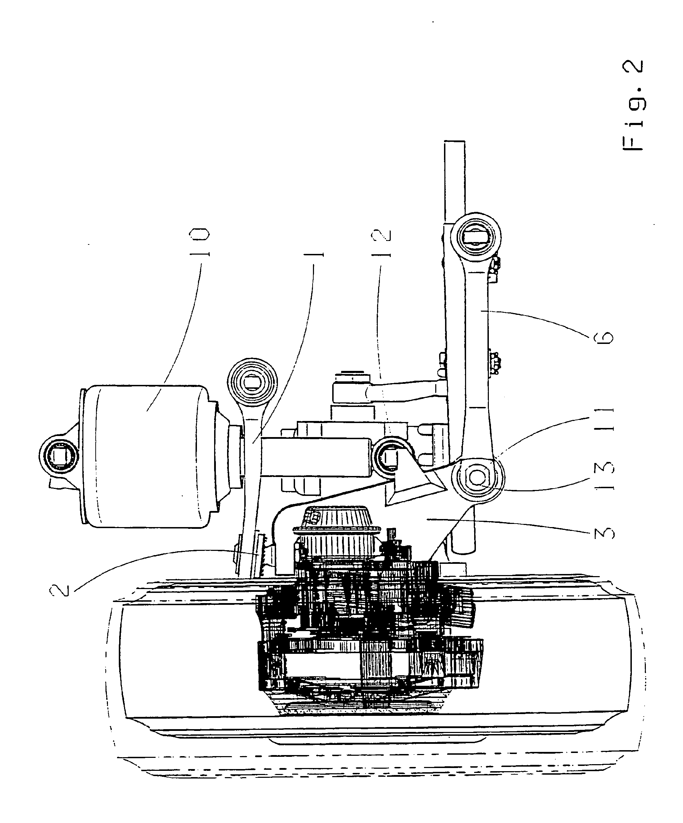

- Fig. 2: eine Vorderansicht der Einzelradaufhängung und

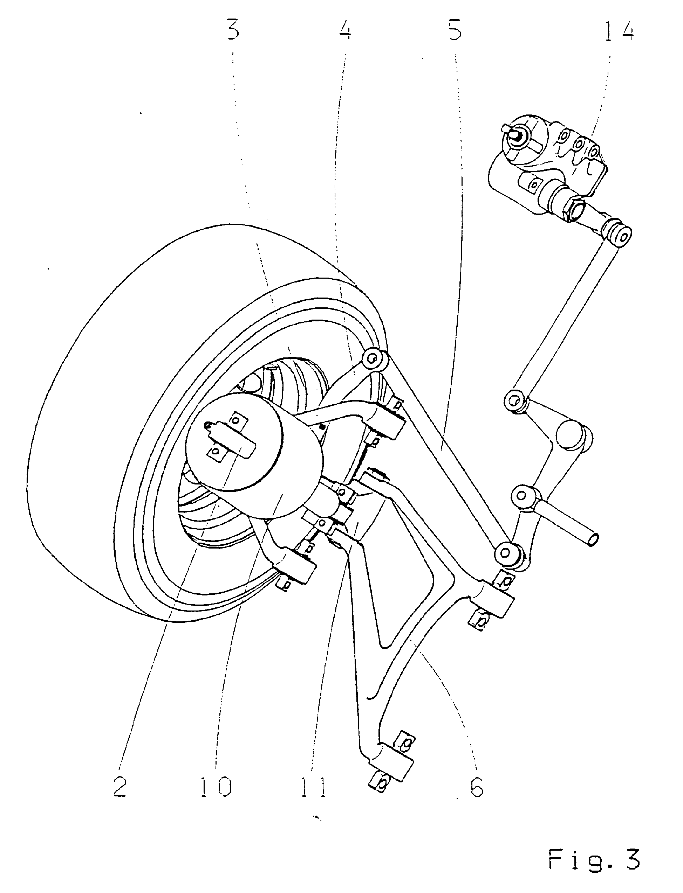

- Fig. 3: eine räumliche Ansicht der Einzelradaufhängung.

### Fig. 1:

Ein oberer Querlenker 1 ist über ein Kugelgelenk 2, welches auch als Molekulargelenk ausgeführt sein kann mit einem Achsschenkelträger 3 verbunden. Ein Lenkhebel 4 ist einerseits mit dem Achsschenkel und andererseits mit einer Spurstange 5 verbunden. Die Spurstange 5 und der Lenkhebel 4 sind auf Höhe des unteren Querlenkers 6 angeordnet. Der untere Querlenker 6 ist einerseits mit dem Achsschenkelträger 3 und andererseits mit einem nicht dargestellten Fahrzeugchassis oder Fahrzeugrahmen verbunden. Die Verbindung 7 des unteren Querlenkers 6 mit dem Fahrzeugchassis oder Fahrzeugrahmen ist nahezu hinter der Radachse 8 angeordnet. Zwischen den Armen 9 des oberen Querlenkers 1 ist ein Stoßdämpferfederbauteil 10 angeordnet. Die Arme 9 umschließen das Stoßdämpferfederbauteil 10. Insbesondere umschließen die Arme den Kolben des Stoßdämpferfederbauteils beim Ausfedern, welches einen großen Ausfederweg ermöglicht. Das Stoßdämpferfederbauteil 10 ist einerseits mit dem Achsschenkelträger 3 und andererseits mit einem nicht dargestellten Fahrzeugchassis oder Fahrzeugrahmen verbunden.

### Fig. 2:

Der untere Querlenker 6 ist über ein Drehgelenk 11 mit Achsschenkelträger 3 verbunden. Durch die Verwendung des kugelförmigen Gelenkes 2 des oberen Querlenkers 1 kann der obere Querlenker 1 ausreichend lang dimensioniert werden, ohne den Lenkwinkel übermäßig stark einzuschränken. Die Verbindung 12 des Stoßdämpferfederbauteils 10 mit dem Achsschenkelträger 3 ist oberhalb der Verbindung 13 des unteren Querlenkers 6 mit dem Achsschenkelträger 3 angeordnet, es sind jedoch andere Verbindungspunkte möglich. Der untere Querlenker 6 und der obere Querlenker 1 sind in der Ausgangsposition nahezu waagerecht angeordnet.

### Fig. 3:

Eine Spurstange 5 steht einerseits mittelbar in Verbindung mit einem Schraubengetriebe 14 und steht andererseits über einen Lenkhebel 4 mit einem Achsschenkelträger 3 in Verbindung. Es ist auch möglich, eine Zahnstangenlenkung zu verwenden. Die Spurstange 5 ist auf Höhe des unteren Querlenkers 6 angeordnet. Der untere Querlenker 6 ist über ein Drehgelenk 11 mit dem Achsschenkelträger 3 verbunden. Der obere Querlenker 1 ist über ein kugelförmiges Gelenk 2 mit dem Achsschenkelträger 3 verbunden. Indem die Spurstange 5 auf Höhe des unteren Querlenkers 6 angeordnet ist, das Stoßdämpferfederbauteil 10 direkt mit dem Achsschenkelträger 3 verbunden ist, der obere Querlenker 1 über ein kugelförmiges Gelenk 2 mit dem Achsschenkelträger 3 verbunden ist und der untere Querlenker 6 über ein Drehgelenk 11 mit dem Achsschenkelträger 3 verbunden ist, wird eine sehr kompakte Einzelradaufhängung für ein gefedertes, lenkbares Rad geschaffen, welches sich durch ausreichenden Federweg und genügend Bauraum im Motortunnel oder Mittelgang auszeichnet.

### Bezugszeichen

- 1: Oberer Querlenker
- 2: Kugelgelenk
- 3: Achsschenkelträger
- 4: Lenkhebel
- 5: Spurstange
- 6: Unterer Querlenker
- 7: Verbindung
- 8: Radachse
- 9: Arme
- 10: Stoßdämpferfederbauteil
- 11: Drehgelenk
- 12: Verbindung
- 13: Verbindung
- 14: Schraubengetriebe

## Patentansprüche

1. Einzelradaufhängung für ein gefedertes, lenkbares Rad, bei welchem das Rad mit einem Achsschenkelträger (3) in Verbindung steht, welcher über einen oberen Querlenker (1) und einen unteren Querlenker (6) mit einem Fahrzeugchassis oder einem Fahrzeugrahmen und mit einem Lenkhebel (4), welcher mit einer Spurstange (5) in Verbindung steht und mit einem Stoßdämpfer (10) und mit einer Feder (10) verbunden ist, wobei der untere Querlenker (6) über ein Drehgelenk (11) mit dem Achsschenkelträger (3) verbunden ist, und der untere Querlenker (6) auf Höhe des Lenkhebels (4) und der Spurstange (5) angeordnet ist, wobei sich die Spurstange (5) und der untere Querlenker (6) nicht kreuzen, **dadurch gekennzeichnet, dass** der obere Querlenker (1) über ein kugelförmiges Gelenk (2) mit dem Achsschenkelträger (3) verbunden ist und der Stoßdämpfer (10) und die Feder (10) als ein Stoßdämpferfederbauteil (10) direkt mit dem Achsschenkelträger (3) verbunden ist, wobei das Stoßdämpferfederbauteil (10)zwischen Armen des oberen Querlenkers angeordnet ist, wodurch der obere Querlenker in Richtung Fahrzeugaußenseite verschoben ist.

2. Einzelradaufhängung für ein gefedertes, lenkbares Rad nach Anspruch 1, **dadurch gekennzeichnet, dass** das kugelförmige Gelenk (2) als Kugelgelenk ausgeführt ist.

3. Einzelradaufhängung für ein gefedertes, lenkbares Rad nach Anspruch 1, **dadurch gekennzeichnet, dass** das kugelförmige Gelenk(2) als Molekulargelenk ausgeführt ist.

4. Einzelradaufhängung für ein gefedertes, lenkbares Rad nach Anspruch 1, **dadurch gekennzeichnet, dass** die Verbindungen (7) des unteren Querlenkers (6) mit dem Fahrzeugrahmen, oder dem Fahrzeugchassis nahezu hinter der Raddrehachse (8) angeordnet ist.

## Claims

1. Independent suspension for a suspended steered wheel, with the wheel being linked to a steering-knuckle carrier (3), which via an upper wishbone (1) and a lower wishbone (6) is connected to a vehide chassis or a vehide frame, and to a steering drop arm (4), which is linked to a steering tie rod (5), and to a shock absorber (10) and a spring (10), with the lower wishbone (6) being linked to the steering-knuckle carrier (3) by a hinge (11) and arranged at the height of the steering drop arm (4) and the steering tie rod (5), with the steering tie rod (5) and the lower wishbone (6) not crossing each other, **characterized in that** the upper wishbone (1) is linked to the steering-knude carrier (3) via a spherical joint (2) and that the shock absorber (10) and the spring (10) constitute an absorber/spring component (10) which is directly linked to the steering-knuckle carrier (3), with the absorber/spring component (10) being arranged between arms of the upper wishbone, as a result of which the upper wishbone is displaced towards the vehide exterior.

2. Independent suspension for a suspended steered wheel according to claim 1, **characterized in that** the spherical joint (2) is a ball-and-socket joint.

3. Independent suspension for a suspended steered wheel according to claim 1, **characterized in that** the spherical joint (2) is a molecular joint.

4. Individual suspension for a suspended steered wheel according to claim 1, **characterized in that** the connections (7) of the lower wishbone (6) with the vehicle chassis or the vehicle frame are arranged virtually behind the wheel center line (8).

## Revendications

1. Suspension de roue indépendante pour une roue directrice suspendue, dans laquelle la roue est en liaison avec un support de pivot (3) qui est relié à un châssis de véhicule ou à un cadre de véhicule par l'intermédiaire d'un bras transversal supérieur (1) et d'un bras transversal inférieur (6), à un levier de commande de pivot (4) qui est en liaison avec une barre d'accouplement (5), à un amortisseur (10) et à un ressort (10), le bras transversal inférieur (6) étant relié au support de pivot (3) par l'intermédiaire d'une articulation tournante (11) et le bras transversal inférieur (6) étant disposé au niveau du levier de commande de pivot (4) et de la barre d'accouplement (5), la barre d'accouplement (5) et le bras transversal inférieur (6) ne se croisant pas, **caractérisée en ce que** le bras transversal supérieur (1) est relié au support de pivot (3) par l'intermédiaire d'une articulation sphérique (2), et l'amortisseur (10) et le ressort (10), sous la forme d'un ensemble amortisseur et ressort (10), sont reliés directement au support de pivot (3), l'ensemble amortisseur et ressort (10) étant disposé entre les branches du bras transversal supérieur, de sorte que le bras transversal supérieur est reporté en direction du côté extérieur du véhicule.

2. Suspension de roue indépendante pour une roue directrice suspendue selon la revendication 1, **caractérisée en ce que** l'articulation sphérique (2) est constituée par une articulation à rotule.

3. Suspension de roue indépendante pour une roue directrice suspendue selon la revendication 1, **caractérisée en ce que** l'articulation sphérique (2) est constituée par une articulation moléculaire.

4. Suspension de roue indépendante pour une roue directrice suspendue selon la revendication 1, **caractérisée en ce que** les liaisons (7) entre le bras transversal inférieur (6) et le cadre du véhicule ou le châssis du véhicule sont disposées très près en arrière de l'axe de rotation (8) de la roue.
